# EUROPÄISCHE PATENTSCHRIFT

(11) **EP 2 109 069 B1**
(45) Veröffentlichungstag und Bekanntmachung des Hinweises auf die Patenterteilung: **12.01.2011**
(21) Anmeldenummer: 09004851.3
(22) Anmeldetag: 01.04.2009
(51) Int. Cl.: G06K 19/077

(54) **Verfahren und Vorrichtung zum Implantieren eines Chipmoduls in einen Chipkartenkörper**
Method and device for implanting a chip module in a chip card body
Procédé et dispositif d'implantation d'un module de puce dans un corps de puce

(30) Priorität: 11.04.2008 DE 102008018491
(43) Veröffentlichungstag der Anmeldung: 14.10.2009
(73) Patentinhaber: Giesecke & Devrient GmbH, 81677 München (DE)
(72) Erfinder: Drescher, Georg, 83607 Holzkirchen (DE); Schneider, Thomas, 81379 München (DE); Stuis, Hermann, 82166 Lochham (DE)
(74) Vertreter: Höhfeld, Jochen

(56) Entgegenhaltungen:
- EP-A- 0 296 511
- EP-A- 1 413 978
- DE-C1- 19 637 213
- US-A- 4 701 236

## Beschreibung

Die Erfindung betrifft ein Verfahren und eine Vorrichtung zum Implantieren eines Chipmoduls in einen Chipkartenkörper.

Bei der Produktion von Chipkarten werden der Chipkartenkörper und das Chipmodul getrennt voneinander hergestellt. In einem Schritt der Produktion wird das Chipmodul in den Chipkartenkörper eingesetzt und fixiert. Dieser Schritt wird als Implantieren bezeichnet. Der Chipkartenkörper weist zur Aufnahme des Chipmoduls eine Kavität auf, die beispielsweise durch Fräsen in einem vorangegangenen Schritt hergestellt wurde. Diese Technik findet insbesondere Anwendung bei Karten, die durch Laminieren mehrerer Kunststofffolien hergestellt werden. Bei Karten, die durch Spritzguss hergestellt werden, kann die Kavität direkt beim Spritzgießen des Chipkartenkörpers berücksichtigt werden.

Die Chipmodule werden separat unter Reinraumbedingungen gefertigt und auf einem metallischen Modulband in zumeist mehreren Reihen nebeneinander angeordnet. Außerdem kann das Modulband zur späteren Fixierung der Chipmodule auf den Chipkartenkörpern mit einer Klebeschicht versehen sein, die beim Implantieren durch Hitze aktiviert wird.

Die Chipmodule werden vor dem Implantieren in den Chipkartenkörper aus dem Modulband mit einem Stanzstempel ausgestanzt, mittels eines Unterdrucksaugers aufgenommen und in die Kavität des Chipkartenkörpers befördert und dort durch einen Stempel unter Wärmeeinwirkung eingepresst. Auf dem Transportweg zum Chipkartenkörper ist üblicherweise eine Drehung des ausgestanzten Chipmoduls erforderlich, da der Chipkartenkörper und das Chipmodul auf ihren zugehörigen Transportrichtungen unterschiedlich ausgerichtet sind.

Dieser Vorgang erfordert eine komplexe und dementsprechend teure mechanische Anordnung mit einer Steuerung und einer Pneumatik, die das ausgestanzte Chipmodul mit dem Sauger aufnimmt, transportiert, dreht und exakt in der Kavität des Chipkartenkörpers absetzt.

Eine solche Vorgehensweise wird in der Literatur z.B. in "Vom Plastik zur Chipkarte" von Y. Haghiri und T. Tarantino, 1999, S. 175-177 beschrieben. Ebenso beschreibt das japanische Patent JP-A-01-253492 das Implantieren eines Chipmoduls in einen Chipkartenkörper bei der Herstellung einer Chipkarte. Hier wird zuerst eine Kavität in den Kartenkörper gefräst, wobei die Ränder angeflacht und durch einen Heizstempel geglättet werden, um das Implantieren des Chipmoduls in die Kavität zu erleichtern. Dann wird das Chipmodul eingesetzt und dessen korrekte Position überprüft.

Aus der DE 69419 659 T2 ist ein Verfahren zum Implantieren eines Chipmoduls in einen Chipkartenkörper bekannt, in dem ein vorbereitete Chipmodule enthaltendes Modulband zwischen einen Stanzstempel und eine Aufnahmevorrichtung hindurch geführt wird. Mittels des Stanzstempels wird das Modul aus dem Band ausgestanzt und direkt in die Aufnahmevorrichtung gedrückt, deren Aufnahmeschale selbst die Oberfläche eines weiteren Stempels bildet. Die Aufnahmevorrichtung wird anschließend zusammen mit dem darin abgelegten Chipmodul über eine in einem Chipkartenkörper ausgebildete Kavität bewegt und dort mittels des in der Aufnahmevorrichtung ausgebildeten Stempels in die Kavität gedrückt. Das Verfahren erlaubt den Einbau von Chipmodulen unter Vorspannung. Es erfordert jedoch eine aufwendige Aufnahmevorrichtung und bedingt einen Transport der Chipmodule zwischen mehreren Arbeitsstationen.

Ein Verfahren gemäß dem Oberbegriff des Anspruchs 1 ist aus US 4.701,236 baknnt. Ebenso eine Vorrichtung gemäß dem oberbegriff des Anspruchs 6.

Aufgabe der vorliegenden Erfindung ist es, das Implantieren eines Chipmoduls in den Chipkartenkörper einer Chipkarte einfacher zu gestalten.

Diese Aufgabe wird durch ein Verfahren und eine Vorrichtung gemäß den unabhängigen Ansprüchen gelöst. In davon abhängigen Ansprüchen sind vorteilhafte Weiterbildungen und Ausgestaltungen der Erfindung angegeben.

Ein erfindungsgemäßes Verfahren zum Implantieren eines Chipmoduls in einen Chipkartenkörper umfasst die Schritte gemäß Anspruch 1. Der vorgefertigte Chipkartenkörper, in den bereits eine Kavität eingebracht wurde, sowie das zu implantierende Chipmodul, das auf einem Modulband bereitgestellt wird, werden mittels entsprechender Transportvorrichtungen zugeführt. Das Modulband wird unmittelbar zwischen dem Stanzstempel und dem Kartenkörper hindurchgeführt. Dies ermöglicht das Implantieren des Chipmoduls in die Kavität des Kartenkörpers in einer vorzugsweise kontinuierlichen, insbesondere geradlinigen Bewegung, da der Stanzstempel nun das ausgestanzte Chipmodul direkt in die darunter liegende Kavität des Chipkartenkörpers einsetzt, insbesondere einpressen, kann. Bei dieser Modulbandführung erfolgt das Ausstanzen des Chipmoduls aus dem Modulband von der Kontaktflächenseite des Chipmoduls aus, so dass im weiteren Bewegungsablauf das Chipmodul in die offenliegende Kavität des Chipkartenkörpers gedrückt wird und die Kontaktflächen von außen frei zugänglich sind.

Der Chipkartenkörper und das Modulband werden vor dem Ausstanzen so von der jeweiligen Transportvorrichtung befördert, dass die Kavität des Chipkartenkörpers und das Chipmodul auf dem Modulband direkt übereinander fluchtend angeordnet sind. Dadurch wird die bevorzugte kontinuierliche, insbesondere geradlinige Bewegung begünstigt.

Es ist von Vorteil, wenn die Transportrichtung des Modulbands und die Transportrichtung des Chipkartenkörpers senkrecht aufeinander stehen. Denn durch die entsprechende, vom Chiphersteller vorgegebene Anordnung der einzelnen Chipmodule auf dem Modulband kann so eine zusätzliche Drehung während des Implantierungsprozesses vermieden werden.

Auf dem Modulband sind zwei oder mehr Reihen von Chipmodulen nebeneinander Angeordnet. Das Modulband wird in einer beweglichen Führungsschiene geführt und zwischen dem Stanzstempel und dem Chipkartenkörper hindurchgeführt. Die Führungsschiene wird dann bei Bedarf in oder entgegen der Transportrichtung des Kartenkörpers verschoben, um das jeweilige auszustanzende Chipmodul relativ zum Stanzstempel so auszurichten, dass sich die Kavität, das Chipmodul und der Stanzstempel direkt übereinander befinden. Bei dieser Vorgehensweise muss die Stanzeinheit somit nicht in seitlicher Richtung bewegt werden.

Beim Einsetzen des Chipmoduls in die Kavität des Chipkartenkörpers erfolgt gleichzeitig eine dauerhafte Fixierung. Zu diesem Zweck ist der Stanzstempel vorzugsweise beheizbar und erhitzt beim Einsetzen für kurze Zeit eine hitzeaktivierbare Klebeschicht zwischen dem Chipmodul und dem Chipkartenkörper.

Nachfolgend wird die Erfindung anhand eines Ausführungsbeispiels unter Bezugnahme auf die beigefügten Zeichnungen näher beschrieben. Es zeigen:
Figur 1 eine Implantiervorrichtung mit Modulbandführung und Chipkartenkörperzuführung in der Draufsicht und
Figur 2 eine Implantiervorrichtung in der Seitenansicht.

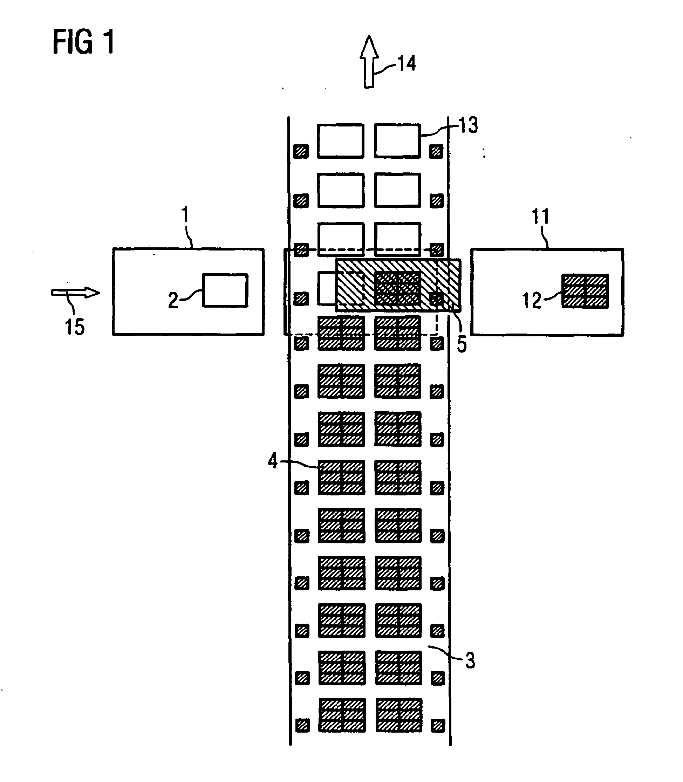

Figur 1 zeigt in schematischer Darstellung den prinzipiellen Aufbau einer Vorrichtung zum Implantieren eines Chipmoduls in einen Chipkartenkörper in Draufsicht gemäß einer bevorzugten Ausführungsform. Es ist die Zuführung des Chipkartenkörpers 1 in Richtung 15 dargestellt. Der Chipkartenkörper 1 weist eine Kavität 2 auf, die in einem vorangegangenen Schritt in den Chipkartenkörper 1 eingebracht wurde. Ebenfalls ist die Zuführung eines Modulbands 3 in Richtung 14 dargestellt, auf welchem zwei Reihen von Chipmodulen 4 angeordnet sind. In diesem Ausführungsbeispiel stehen die beiden Transportrichtungen 14,15 senkrecht aufeinander. Dies ermöglicht das Ausstanzen eines Chipmoduls 4 aus dem Modulband 3 und das Implantieren in den Chipkartenkörper 1 ohne weitere Drehung. Erfindungsgemäß erfolgt das Ausstanzen des Chipmoduls 4 aus dem Modulband 3 und das Einsetzen in die Kavität 2 des Chipkartenkörpers 1 dadurch, dass das Modulband 3 zwischen dem Chipkartenkörper 1 und dem Stanzstempel 5 hindurchgeführt wird. Hierbei sind die Kavität 2 des Chipkartenkörpers 1, das Chipmodul 4 auf dem Modulband 3 und der Stanzstempel 5 direkt übereinander fluchtend angeordnet, um das Ausstanzen des Chipmoduls 4 aus dem Modulband 3 und das Einsetzen des Chipmoduls 4 in die Kavität 2 des Chipkartenkörpers 1 in einer kontinuierlichen, geradlinigen Bewegung zu ermöglichen. Im weiteren Verlauf der Transportrichtung 14 des Modulbands 3 sind die Stanzlöcher 13 im Modulband 3 dargestellt sowie im weiteren Verlauf der Transportrichtung 15 des Chipkartenkörpers 1 eine Chipkarte 11 mit implantiertem Chipmodul 12.

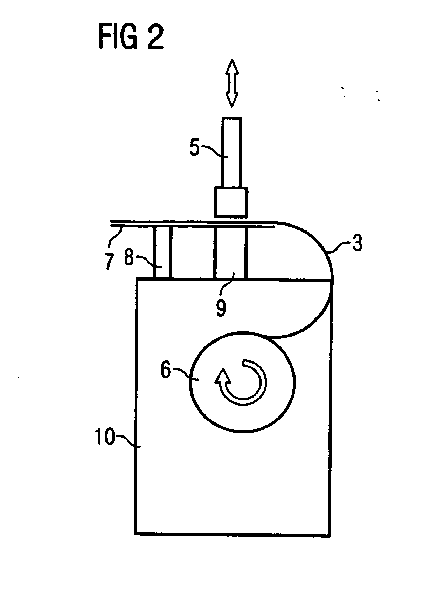

In Figur 2 ist eine erfindungsgemäße Vorrichtung zum Implantieren eines Chipmoduls in einen Chipkartenkörper in Seitenansicht dargestellt. In einem Gehäuse 10 ist eine Spule 6 angebracht, auf der das Modulband 3 mit den Chipmodulen aufgewickelt ist. Bei der Zuführung wird das Modulband 3 abgewickelt und mittels einer Führungsschiene 7 zwischen dem Stanzstempel 5 und dem Chipkartenkörper hindurchgeführt. Der Chipkartenkörper wird in einer dazu senkrechten Richtung mittels einer Transportvorrichtung 9 zugeführt. Durch eine Auf- und Abbewegung stanzt der Stanzstempel 5 die Chipmodule aus dem Modulband 3 aus und setzt sie gleichzeitig in die Chipkartenkörper der darunterliegenden Transportvorrichtung 9 ein. Dabei werden die Chipmodule von einem äußeren Teil des Stanzstempels fixiert, von einer Schneide ausgestanzt und von einem inneren Teil des Stanzstempels nach unten in die Chipkartenkörper gepresst. Der innere Teil des Stanzstempels ist als Heizstempel ausgebildet und aktiviert beim Einpressen der Chipmodule in die Chipkartenkörper durch Erhitzen eine Klebeschicht, die auf der Unterseite der Chipmodule angebracht ist. Dadurch erfolgt gleichzeitig auch eine dauerhafte Fixierung der Chipmodule in den Chipkartenkörpern. Da sich auf dem Modulband 3 mehrere Reihen von Chipmodulen befinden können (siehe Figur 1), ist die Führungsschiene 7 mittels einer Verfahreinheit 8 in und entgegen der Transportrichtung der Chipkartenkörper bewegbar. Auf diese Weise können die Chipmodule aus allen Reihen des Modulbands ausgestanzt werden, ohne den Stanzstempel 5 in seitlicher Richtung zu verlagern.

## Patentansprüche

1. Verfahren zum Implantieren eines Chipmoduls (4) in einen Chipkartenkörper (1), umfassend die Schritte:
- Zuführen des Chipmoduls (4) auf einem Modulband (3), wobei das Modulband (3) zwischen einem Stanzstempel (5) und einem Chipkartenkörper (1) hindurchgeführt wird,
- Ausstanzen des Chipmoduls (4) mittels des Stanzstempels (5) aus dem Modulband (3) und
- Einsetzen und dauerhaftes Fixieren des Chipmoduls (4) in einer Kavität (2) des Chipkartenkörpers (1) mittels des Stanzstempels (5),
**dadurch gekennzeichnet, dass** das Modulband (3) zwei oder mehr Reihen von Chipmodulen (4) aufweist und senkrecht zu einer Transportrichtung (15) des Chipkartenkörpers (1) geführt wird, wobei es beim Schritt des Zuführens des Chipmoduls (4) in einer beweglichen Führungsschiene (7) geführt wird, die in und entgegen einer Transportrichtung (15) des Chipkartenkörpers (1) nach Bedarf verlagert wird, um das Modulband (3) mit dem Chipmodul (4) relativ zum Stanzstempel (5) auszurichten.

2. Verfahren nach Anspruch 1, **dadurch gekennzeichnet, dass** die Kavität (2) des Chipkartenkörpers (1) und das Chipmodul (4) vor den Schritten des Ausstanzens des Chipmoduls (4) aus dem Modulband (3) und Einsetzens des Chipmoduls (4) in die Kavität (2) des Chipkartenkörpers (1) direkt fluchtend übereinander angeordnet werden.

3. Verfahren nach Anspruch 1 oder 2, **dadurch gekennzeichnet, dass** die Schritte des Ausstanzens des Chipmoduls (4) aus dem Modulband (3) und Einsetzens des Chipmoduls (4) in die Kavität (2) des Chipkartenkörpers (1) mittels des Stanzstempels (5) in einer kontinuierlichen Bewegung erfolgen.

4. Verfahren nach einem der Ansprüche 1 bis 3, **dadurch gekennzeichnet, dass** die Schritte des Ausstanzens des Chipmoduls (4) aus dem Modulband (3) und Einsetzens des Chipmoduls (4) in die Kavität (2) des Chipkartenkörpers (1) mittels des Stanzstempels (5) in einer geradlinigen Bewegung erfolgen.

5. Verfahren nach einem der Ansprüche 1 bis 4, **dadurch gekennzeichnet, dass** der Stanzstempel (5) beheizt wird und das dauerhafte Fixieren des Chipmoduls (4) in der Kavität (2) des Chipkartenkörpers (1) mittels eines hitzeaktivierbaren Klebemittels erfolgt.

6. Vorrichtung zum Implantieren eines Chipmoduls (4) in einen Chipkartenkörper (1), umfassend eine Transportvorrichtung (9) zum Zuführen des Chipkartenkörpers (1), eine Transportvorrichtung für ein Modulband (3) zum Zuführen des Chipmoduls (4) mittels des Modulbands (3) und einen Stanzstempel (5) zum Ausstanzen des Chipmoduls (4) aus dem Modulband (3), der dazu eingerichtet ist, das Chipmodul (4) in eine Kavität (2) des Chipkartenkörpers (1) einzusetzen, **dadurch gekennzeichnet, dass** die Transportrichtung (14) des Modulbands (3) senkrecht zur Transportrichtung (15) des Chipkartenkörpers (1) ist und die Transportvorrichtung für das Modulband (3) und die Transportvorrichtung (9) zum Zuführen des Chipkartenkörpers (1) eingerichtet sind, das Modulband (3) zwischen dem Stanzstempel (5) und dem Chipkartenkörper (1) hindurchzuführen, und dass eine bewegliche Führungsschiene (7) zum Führen des Modulbands (3) vorgesehen ist, die in und entgegen einer Transportrichtung (15) der Transportvorrichtung für den Chipkartenkörper (1) verlagerbar ist.

7. Vorrichtung nach Anspruch 6, **dadurch gekennzeichnet, dass** die Transportvorrichtungen für den Chipkartenkörper (1) und für das Modulband (3) so ausgebildet sind, dass die Kavität (2) des Chipkartenkörpers (1) und das Chipmodul (4) des Modulbands (3) vor dem Ausstanzen des Chipmoduls (4) aus dem Modulband (3) und Einsetzen des Chipmoduls (4) in die Kavität (2) des Chipkartenkörpers (1) direkt fluchtend übereinander anordenbar sind.

8. Vorrichtung nach Anspruch 6 oder 7, **dadurch gekennzeichnet, dass** das Ausstanzen des Chipmoduls (4) aus dem Modulband (3) und Einsetzen des Chipmoduls (4) in die Kavität (2) des Chipkartenkörpers (1) mittels des Stanzstempels (5) in einer kontinuierlichen Bewegung durchführbar ist.

9. Vorrichtung nach einem der Ansprüche 6 bis 8, **dadurch gekennzeichnet, dass** das Ausstanzen des Chipmoduls (4) aus dem Modulband (3) und Einsetzen des Chipmoduls (4) in die Kavität (2) des Chipkartenkörpers (1) mittels des Stanzstempels (5) in einer geradlinigen Bewegung durchführbar ist.

10. Vorrichtung nach einem der Ansprüche 7 bis 9, **dadurch gekennzeichnet, dass** der Stanzstempel (5) beheizbar ist.

## Claims

1. A method for implanting a chip module (4) into a chip-card body (1), comprising the steps of:
- supplying the chip module (4) on a module tape (3), the module tape (3) being guided through between a stamping punch (5) and a chip-card body (1),
- punching the chip module (4) out of the module tape (3) by means of the stamping punch (5), and
- inserting and permanently fixing the chip module (4) in a cavity (2) of the chip-card body (1) by means of the stamping punch (5),
**characterized in that** the module tape (3) has two or more rows of chip modules (4) and is guided perpendicular to a transport direction (15) of the chip-card body (1), wherein it is guided, in the step of supplying the chip module (4), in a movable guide rail (7) which is shifted in, and contrary to, a transport direction (15) of the chip-card body (1) as required in order to align the module tape (3) with the chip module (4) relative to the stamping punch (5).

2. The method according to claim 1, **characterized in that** the cavity (2) of the chip-card body (1) and the chip module (4) are arranged directly flush one over the other before the steps of punching the chip module (4) out of the module tape (3) and inserting the chip module (4) into the cavity (2) of the chip-card body (1).

3. The method according to claim 1 or 2, **characterized in that** the steps of punching the chip module (4) out of the module tape (3) and inserting the chip module (4) into the cavity (2) of the chip-card body (1) by means of the stamping punch (5) are effected in a continuous motion.

4. The method according to any of claims 1 to 3, **characterized in that** the steps of punching the chip module (4) out of the module tape (3) and inserting the chip module (4) (4) into the cavity (2) of the chip-card body (1) by means of the stamping punch (5) are effected in a straight motion.

5. The method according to any of claims 1 to 4, **characterized in that** the stamping punch (5) is heated, and the permanent fixing of the chip module (4) in the cavity (2) of the chip-card body (1) is effected by means of a heat-activatable adhesive.

6. An apparatus for implanting a chip module (4) into a chip-card body (1), comprising a transport apparatus (9) for supplying the chip-card body (1), a transport apparatus for a module tape (3) for supplying the chip module (4) by means of the module tape (3), and a stamping punch (5) for punching the chip module (4) out of the module tape (3) and adapted to insert the chip module (4) into a cavity (2) of the chip-card body (1), **characterized in that** the transport direction (14) of the module tape (3) is perpendicular to the transport direction (15) of the chip-card body (1), and the transport apparatus for the module tape (3) and the transport apparatus (9) for supplying the chip-card body (1) are adapted to guide the module tape (3) through between the stamping punch (5) and the chip-card body (1), and that there is provided for guiding the module tape (3) a movable guide rail (7) which is shiftable in, and contrary to, a transport direction (15) of the transport apparatus for the chip-card body (1).

7. The apparatus according to claim 6, **characterized in that** the transport apparatuses for the chip-card body (1) and for the module tape (3) are so configured that the cavity (2) of the chip-card body (1) and the chip module (4) of the module tape (3) are arrangeable directly flush one over the other before the punching of the chip module (4) out of the module tape (3) and inserting of the chip module (4) into the cavity (2) of the chip-card body (1).

8. The apparatus according to claim 6 or 7, **characterized in that** the punching of the chip module (4) out of the module tape (3) and inserting of the chip module (4) into the cavity (2) of the chip-card body (1) by means of the stamping punch (5) is performable in a continuous motion.

9. The apparatus according to any of claims 6 to 8, **characterized in that** the punching of the chip module (4) out of the module tape (3) and inserting of the chip module (4) into the cavity (2) of the chip-card body (1) by means of the stamping punch (5) is performable in a straight motion.

10. The apparatus according to any of claims 7 to 9, **characterized in that** the stamping punch (5) is heatable.

## Revendications

1. Procédé d'implémentation d'un module puce (4) dans un corps de carte à puce (1), comprenant les étapes :
- amenage du module puce (4) sur une bande modulaire (3), la bande modulaire (3) étant acheminée entre un poinçon de découpage (5) et un corps de carte à puce (1),
- découpage du module puce (4) dans la bande modulaire (3) au moyen du poinçon de découpage (5) et
- insertion et fixation durable du module puce (4) dans une cavité (2) du corps de carte à puce (1) au moyen du poinçon de découpage (5),
**caractérisé en ce que** la bande modulaire (3) comporte deux ou davantage de rangées de modules puces (4) et est acheminée perpendiculairement à une direction de transport (15) du corps de carte à puce (1), et est, lors de l'étape de l'amenage du module puce (4), conduite dans une glissière de guidage mobile (7) qui, afin de positionner par rapport au poinçon de découpage (5) la bande modulaire (3) recelant le module puce (4), est déplacée selon les besoins soit dans une direction de transport (15) du corps de carte à puce (1), soit en direction inverse.

2. Procédé selon la revendication 1, **caractérisé en ce que**, avant les étapes du découpage du module puce (4) dans la bande modulaire (3) et de l'insertion du module puce (4) dans la cavité (2) du corps de carte à puce (1), la cavité (2) du corps de carte à puce (1) et le module puce (4) sont disposés l'un au dessus de l'autre de manière directement alignée.

3. Procédé selon la revendication 1 ou 2, **caractérisé en ce que** les étapes du découpage du module puce (4) dans la bande modulaire (3) et de l'insertion du module puce (4) dans la cavité (2) du corps de carte à puce (1) ont lieu au moyen du poinçon de découpage (5) en un mouvement continu.

4. Procédé selon une des revendications de 1 à 3, **caractérisé en ce que** les étapes du découpage du module puce (4) dans la bande modulaire (3) et de l'insertion du module puce (4) dans la cavité (2) du corps de carte à puce (1) ont lieu au moyen du poinçon de découpage (5) en un mouvement rectiligne.

5. Procédé selon une des revendications de 1 à 4, **caractérisé en ce que** le poinçon de découpage (5) est chauffé et **en ce que** la fixation durable du module puce (4) dans la cavité (2) du corps de carte à puce (1) a lieu au moyen d'une colle activable à chaud.

6. Dispositif d'implémentation d'un module puce (4) dans un corps de carte à puce (1), comprenant un dispositif de transport (9) destiné à l'amenage du corps de carte à puce (1), un dispositif de transport pour une bande modulaire (3) destiné à l'amenage du module puce (4) au moyen de la bande modulaire (3), et un poinçon de découpage (5) destiné à découper le module puce (4) dans la bande modulaire (3) et qui est conçu pour insérer le module puce (4) dans une cavité (2) du corps de carte à puce (1), **caractérisé en ce que** la direction de transport (14) de la bande modulaire (3) est perpendiculaire à la direction de transport (15) du corps de carte à puce (1) et **en ce que** le dispositif de transport pour la bande modulaire (3) et le dispositif de transport (9) destiné à l'amenage du corps de carte à puce (1) sont conçus pour acheminer la bande modulaire (3) entre le poinçon de découpage (5) et le corps de carte à puce (1), et **en ce qu'**une glissière de guidage mobile (7) déplaçable dans une direction de transport (15) du dispositif de transport du corps de carte à puce (1) et en direction inverse est prévue pour guider la bande modulaire (3).

7. Dispositif selon la revendication 6, **caractérisé en ce que** les dispositifs de transport pour le corps de carte à puce (1) et pour la bande modulaire (3) sont réalisés de telle manière que la cavité (2) du corps de carte à puce (1) et le module puce (4) de la bande modulaire (3) peuvent être disposés l'un au dessus de l'autre de manière directement alignée avant le découpage du module puce (4) dans la bande modulaire (3) et l'insertion du module puce (4) dans la cavité (2) du corps de carte à puce (1).

8. Dispositif selon la revendication 6 ou 7, **caractérisé en ce que** le découpage du module puce (4) dans la bande modulaire (3) et l'insertion du module puce (4) dans la cavité (2) du corps de carte à puce (1) sont exécutables au moyen du poinçon de découpage (5) en un mouvement continu.

9. Dispositif selon la revendication 6 à 8, **caractérisé en ce que** le découpage du module puce (4) dans la bande modulaire (3) et l'insertion du module puce (4) dans la cavité (2) du corps de carte à puce (1) sont exécutables au moyen du poinçon de découpage (5) en un mouvement rectiligne.

10. Dispositif selon une des revendications de 7 à 9, **caractérisé en ce que** le poinçon de découpage (5) est chauffable.
